# EUROPÄISCHE PATENTSCHRIFT

(11) **EP 3 527 445 B1**
(45) Veröffentlichungstag und Bekanntmachung des Hinweises auf die Patenterteilung: **05.08.2020**
(21) Anmeldenummer: 18208431.9
(22) Anmeldetag: 27.11.2018
(51) Int. Cl.: B60W 10/06, B60W 10/30, B60W 10/103, B60W 30/188, B60W 30/18

(54) **VERFAHREN ZUM BETREIBEN EINER SELBSTFAHRENDEN ERNTEMASCHINE**
METHOD FOR OPERATING A SELF-PROPELLED HARVESTER
PROCÉDÉ DE FONCTIONNEMENT D'UNE MOISSONNEUSE AUTONOME

(30) Priorität: 14.02.2018 DE 102018103250
(43) Veröffentlichungstag der Anmeldung: 21.08.2019
(73) Patentinhaber: CLAAS Selbstfahrende Erntemaschinen GmbH, 33428 Harsewinkel (DE)
(72) Erfinder: Reckermann, Michael, 48346 Ostbevern (DE); Uesbeck, Tobias, 48599 Gronau-Epe (DE); Deipenbrock, Ulrich, 48268 Greven (DE); Scholle, Hendrik, 32052 Herford (DE); Heißenbüttel, Herrmann, 33428 Harsewinkel (DE)
(74) Vertreter: CLAAS Gruppe

(56) Entgegenhaltungen:
- EP-A2- 1 052 388
- EP-A2- 2 965 938
- DE-A1- 10 061 431

## Beschreibung

Die vorliegende Erfindung betrifft ein Verfahren zum Betreiben einer selbstfahrenden Erntemaschine gemäß dem Oberbegriff des Anspruches 1. Des Weiteren betrifft die vorliegende Erfindung eine selbstfahrende Erntemaschine gemäß dem Oberbegriff des Anspruches 12.

Selbstfahrenden Erntemaschine werden wahlweise in einem Erntebetriebsmodus und einem Straßenfahrmodus betrieben. Hierzu ist ein sogenannter Straßenfahrschalter vorgesehen, der von einer Bedienperson betätigt wird, um die Erntemaschine in einem der beiden Betriebsmodi betreiben zu können. So lassen sich Arbeitsaggregate der Erntemaschine im Straßenfahrmodus nicht aktivieren bzw. betreiben. Dafür lässt sich die Erntemaschine im Straßenfahrmodus mit einer höheren Fahrgeschwindigkeit betreiben als im Erntebetriebsmodus. Eine solche Erntemaschine umfasst einen Verbrennungsmotor, dessen Drehzahl durch eine Steuerungsvorrichtung in Abhängigkeit von dem gewählten Betriebsmodus eingestellt wird.

Ein gattungsgemäßes Verfahren zum Betreiben einer selbstfahrenden Erntemaschine sowie eine selbstfahrende Erntemaschine sind aus der EP 1 052 388 B1 bekannt. Darin ist eine automatische Drehzahlvorgabe für einen als Verbrennungsmotor ausgebildeten Antriebsmotor bei Transport- oder Straßenfahrt in Abhängigkeit von einer Vorgabe einer Fahrgeschwindigkeit beschrieben. So wird im Fall des Stillstands die Motordrehzahl von einer für die Erreichung der vorgegeben Fahrgeschwindigkeit erforderlichen Drehzahl auf eine Leerlaufdrehzahl geändert. Entsprechend wird für die Dauer des Stillstands der Kraftstoffverbrauch reduziert. Wird durch die Bedienung eines Fahrhebels ein Anfahren der Arbeitsmaschine veranlasst, wird die Motordrehzahl von der Leerlaufdrehzahl auf die erforderliche Drehzahl angehoben, die zur Erreichung und Einhaltung der vorgegebenen Fahrgeschwindigkeit erforderlich ist.

Bei niedrigen Fahrgeschwindigkeiten wird ein deutlich größeres Drehmoment benötigt als bei hohen Fahrgeschwindigkeiten, insbesondere beim Beschleunigen. Bei einer der vorgegebenen Fahrgeschwindigkeit entsprechenden Motordrehzahl steht somit nur ein geringes Anfahrdrehmoment zur Verfügung. Dies kann bei langen Getriebeübersetzungen und in Abhängigkeit von sehr niedrigen, von der vorgegebenen Fahrgeschwindigkeit abhängigen, Motordrehzahlen bei der Straßenfahrt zu einem Abwürgen des Verbrennungsmotors führen.

Weiterer Stand der Technik ist aus EP 2 965 938 A2 und DE 100 61 431 A1 bekannt.

Somit liegt der Erfindung die Aufgabe zugrunde, ein Verfahren zum Betreiben einer selbstfahrenden Erntemaschine sowie eine selbstfahrende Erntemaschine bereitzustellen, welche die Gefahr eines Abwürgens des Verbrennungsmotors beim Anfahren vermeiden.

Diese Aufgabe wird erfindungsgemäß durch die Merkmale des Verfahrensanspruches 1 sowie durch eine selbstfahrende Erntemaschine gemäß dem Anspruch 12 gelöst.

Vorteilhafte Weiterbildungen sind Gegenstand der Unteransprüche.

Gemäß dem Anspruch 1 wird ein Verfahren zum Betreiben einer selbstfahrenden Erntemaschine vorgeschlagen, welche wahlweise in einem Erntebetriebsmodus und einem Straßenfahrmodus betrieben wird. Die Erntemaschine umfasst einen Verbrennungsmotor, dessen Drehzahl durch eine Steuerungsvorrichtung in Abhängigkeit von dem gewählten Betriebsmodus eingestellt wird. Um ein Abwürgen des Verbrennungsmotors beim Anfahren zu vermeiden, ist vorgesehen, dass von der Steuerungsvorrichtung im Straßenfahrmodus für einen Anfahrvorgang aus dem Stillstand eine Anfahrdrehzahl vorgegeben wird, die bis auf eine zum Erreichen einer zulässigen Maximalfahrgeschwindigkeit erforderliche Motordrehzahl abgesenkt wird. Die von dem Verbrennungsmotor abgegebene Motordrehzahl wird bei Betätigung eines Fahrhebels oder Fahrpedals auf eine Anfahrdrehzahl angehoben, welche deutlich über der für das Erreichen der zulässigen Maximalfahrgeschwindigkeit erforderlichen Motordrehzahl liegt. Im Zeitpunkt des Anfahrens steht mit der Anfahrdrehzahl ein höheres Drehmoment zur Verfügung, wodurch die Gefahr des Abwürgens des Verbrennungsmotors minimiert wird. Mit zunehmender Anfahrgeschwindigkeit wird die Motordrehzahl bis auf die für das Erreichen der zulässigen Maximalfahrgeschwindigkeit erforderliche Motordrehzahl abgesenkt. Somit wird gewährleistet, dass für den Anfahrvorgang der Erntemaschine aus dem Stillstand heraus ein ausreichendes Drehmoment zur Verfügung steht und ein Abwürgen des Verbrennungsmotors vermieden werden kann. Darüber hinaus führt die anschließende Absenkung auf die für das Erreichen der zulässigen Maximalfahrgeschwindigkeit erforderliche Motordrehzahl zu einer Reduzierung der Lärmemission sowie des Kraftstoffverbrauchs. Ein weiterer Vorteil besteht darin, dass der Verbrennungsmotor (hydrostatische Fahrantrieb) durch das Verfahren kleiner dimensioniert werden kann, wenn das Anfahrdrehmoment der nach unten begrenzende Faktor für die Auslegung ist.

Insbesondere kann der Grad der Absenkung der Anfahrdrehzahl in Abhängigkeit von der zulässigen Maximalfahrgeschwindigkeit durchgeführt werden. Dabei kann die Absenkung umso schneller erfolgen, je niedriger die zulässige Maximalfahrgeschwindigkeit ist. Die zulässige Maximalfahrgeschwindigkeit des Erntefahrzeugs im Straßenfahrbetrieb ist länderspezifisch geregelt und kann daher stark variieren. Der Bereich der zulässigen Maximalfahrgeschwindigkeit kann, in Abhängigkeit von der Ausgestaltung des Fahrwerks der Erntemaschine, mit Rädern oder mit Halb- bzw. Vollraupe, zwischen 15 km/h und 50 km/h liegen.

Gemäß einer vorteilhaften Weiterbildung kann eine maximale Anfahrgeschwindigkeit vorgegeben werden, die unterhalb der zulässigen Maximalfahrgeschwindigkeit liegt, wobei bis zum Erreichen der maximalen Anfahrgeschwindigkeit die Anfahrdrehzahl auf die für das Erreichen der zulässigen Maximalfahrgeschwindigkeit erforderlichen Motordrehzahl abgesenkt wird. Dabei kann die maximale Anfahrgeschwindigkeit beispielsweise bei etwa 15 km/h liegen, während die länderspezifische zulässige Maximalfahrgeschwindigkeit beispielsweise 20 km/h oder mehr beträgt. Hierdurch kann dem Umstand Rechnung getragen werden, dass es bei einer mechanischen Verstellung einer Hydraulikpumpe eines hydrostatischen Fahrantriebs keine Rückkopplung zwischen der Motordrehzahl und der Fahrgeschwindigkeit gibt. Entsprechend kann die zum Erreichen der zulässigen Maximalfahrgeschwindigkeit erforderliche Motordrehzahl nach Erreichen der Anfahrgeschwindigkeit bei zunehmender Fahrgeschwindigkeit konstant gehalten werden, wodurch die die Fahrgeschwindigkeit begrenzt wird. Somit wird die Einhaltung der zulässigen Maximalfahrgeschwindigkeit gewährleistet.

Dabei kann das Vorliegen eines Anfahrvorgangs der Erntemaschine anhand einer Betätigung eines Fahrhebels oder eines Fahrpedals detektiert werden. Hierzu kann die Auslenkung des Fahrhebels oder des Fahrpedals bei dessen Betätigung sensorisch detektiert werden. Dabei bildet bei einem Fahrhebel üblicherweise dessen Neutralstellung den Ausgangspunkt der Betätigung. Wird ein Anfahrvorgang detektiert, so wird von der Steuerungsvorrichtung die Anfahrdrehzahl vorgegeben.

Bevorzugt können für unterschiedliche zulässige Maximalfahrgeschwindigkeit verschiedene Anfahrdrehzahl-Kennlinien in einem Speicher der Steuerungsvorrichtung hinterlegt werden. Damit kann den länderspezifischen Anforderungen an die zulässige Maximalfahrgeschwindigkeit Rechnung getragen werden. Denkbar ist aber auch, dass eine Bedienperson der Erntemaschine eine Anfahrkennlinie auswählen kann, mit welcher der Verbrennungsmotor der Erntemaschine für den Vorgang des Anfahrens angesteuert wird. Insbesondere können die Anfahrdrehzahl-Kennlinien einen rampenförmigen Verlauf aufweisen. Andere Verläufe für die Anfahrdrehzahl-Kennlinien sind ebenfalls denkbar.

Des Weiteren kann vorgesehen sein, dass die Absenkung der Anfahrdrehzahl während des Anfahrvorgangs bei zunehmender Fahrgeschwindigkeit der Erntemaschine durchgeführt wird. Wird während des Anfahrvorganges die Beschleunigung reduziert respektive nimmt die Fahrgeschwindigkeit ab, so wird die aktuelle Motordrehzahl entsprechend der Kennlinie zur Drehzahlsteuerung wieder angehoben, höchstens jedoch bis zu der Anfahrdrehzahl. Dies hat den Effekt, dass bei einer erneuten Beschleunigung ein ausreichendes Drehmoment zur Verfügung steht.

Gemäß einer bevorzugten Weiterbildung kann die Anfahrdrehzahl auf einen Wert zwischen 1400 min⁻¹ und 1600 min⁻¹, insbesondere in einem Bereich um 1500 min⁻¹, eingestellt werden.

Eine bevorzugte Weiterbildung sieht vor, dass bei Detektion eines Stillstands der Erntemaschine die Motordrehzahl unabhängig von dem ausgewählten Betriebsmodus, Erntebetriebsmodus oder Straßenfahrmodus, automatisch auf eine Leerlaufdrehzahl, insbesondere in einem Bereich zwischen etwa 800 min⁻¹ und 900 min⁻¹, abgesenkt wird. Hierdurch lässt sich der Kraftstoffverbrauch deutlich reduzieren, insbesondere im Erntebetriebsmodus, da hier im Allgemeinen mit höheren Betriebsdrehzahlen gearbeitet wird, da neben dem hydrostatischen Fahrantrieb zusätzlich Arbeitsaggregate der Erntemaschine angetrieben werden müssen. So ist es von Erntemaschinen, beispielsweise Mähdreschern, bekannt, dass diese lediglich über mehrere auswählbare Drehzahlstufen bzw. Leistungsstufen verfügen, welche in beiden Betriebsmodi zur Verfügung stehen. Die automatische Absenkung der Motordrehzahl auf eine Leerlaufdrehzahl bei Stillstand des Fahrzeugs hat den Vorteil der Kraftstoffersparnis, welche umso größer Ausfällt, je höher das Betriebsdrehzahlniveau ist, von dem ausgehend abgesenkt wird.

Weiterhin kann die Absenkung auf die Leerlaufdrehzahl fahrgeschwindigkeits- und/ oder lastabhängig durchgeführt werden. Während in dem Betriebsmodus Straßenfahrmodus lediglich die Fahrgeschwindigkeit ein Kriterium ist, um den Stillstand der Erntemaschine festzustellen, ist es im Erntebetriebsmodus zusätzlich erforderlich zu überprüfen, ob durch ein oder mehrere Arbeitsaggregate Leistung abgefordert wird, bevor eine Absenkung der Motordrehzahl auf die Leerlaufdrehzahl durchgeführt wird. So kann beispielsweise eine als Mähdrescher ausgebildete Erntemaschine im Erntebetriebsmodus auf einem Feld stillstehen, d.h. die Fahrgeschwindigkeit ist null, jedoch besteht gleichzeitig eine Lastanforderung durch eine Korntankentleervorrichtung, mit welcher Erntegut aus dem Korntank in ein Transportfahrzeug überladen wird. In dieser Situation wird die Motordrehzahl nicht auf die Leerlaufdrehzahl abgesenkt, da eine Lastanforderung besteht. Hingegen kann für die Dauer eines Wartevorgangs der Erntemaschine im Erntebetriebsmodus, während dessen die Erntemaschine stillsteht und keine Lastanforderung vorhanden ist, die Motordrehzahl auf die Leerlaufdrehzahl abgesenkt werden. Im Straßenfahrmodus wird die Fahrgeschwindigkeit überwacht, um zu bestimmen, ob die Bedingung für eine Absenkung auf die Leerlaufdrehzahl vorliegt. Wird nach erfolgter Absenkung auf die Leerlaufdrehzahl im Straßenfahrmodus ein Anfahrvorgang detektiert, wird die Motordrehzahl auf die Anfahrdrehzahl angehoben.

Insbesondere kann bei einer Lastanforderung die Motordrehzahl von der Leerlaufdrehzahl auf eine für den Betrieb der Erntemaschine voreingestellte Drehzahlstufe angehoben werden. Eine Lastanforderung ist beispielsweise das Einschalten eines Hauptantriebs, eine Hydraulikanforderung, das Auslenken des Fahrhebels oder das Einschalten eines Arbeitsaggregates der Erntemaschine.

Gemäß einer bevorzugten Weiterbildung kann die Motordrehzahl lastabhängig geregelt werden. Auf diese Weise können die Motordrehzahl und die Leistungsstufe ausschließlich in Abhängigkeit von einer Lastanforderung bestimmt werden, wobei hierfür eine optimale kraftstoffsparende Motordrehzahl gewählt wird. So können Einkuppelvorgänge beim Zuschalten von Arbeitsaggregaten automatisch Drehzahloptimiert vorgenommen werden, wodurch sich der Verschleiß verringert wird. Darüber hinaus trägt eine lastabhängige Regelung der Motordrehzahl zu einer Erhöhung des Bedienkomforts bei, da der Verbrennungsmotor mit optimaler Motordrehzahl betrieben wird. Neben einem geringeren Kraftstoffverbrauch wird die Geräuschemission verringert, was zu einer Entlastung von Bedienperson und Umwelt beiträgt.

Weiterhin wird die eingangs gestellte Aufgabe durch eine selbstfahrende Erntemaschine gelöst, welche wahlweise in einem Erntebetriebsmodus und einem Straßenfahrmodus betreibbar ist, umfassend einen Verbrennungsmotor, dessen Drehzahl durch eine Steuerungsvorrichtung in Abhängigkeit von dem gewählten Betriebsmodus eingestellt wird, wobei die Steuerungsvorrichtung dazu eingerichtet ist, im Straßenfahrmodus für einen Anfahrvorgang aus dem Stillstand eine Anfahrdrehzahl vorzugeben, die bis auf eine zum Erreichen einer zulässigen Maximalfahrgeschwindigkeit erforderliche Motordrehzahl abgesenkt wird.

Dabei kann die Steuerungsvorrichtung dazu eingerichtet sein, die Absenkung der Anfahrdrehzahl bis zum Erreichen einer Anfahrgeschwindigkeit durchzuführen.

Besonders vorteilhaft ist es, wenn der Verbrennungsmotor einen Fahrantrieb mit zumindest einer Hydraulikpumpe und zumindest einem Hydraulikmotor antreibt, wobei die zumindest eine Hydraulikpumpe mittels eines Fahrhebels mechanisch verstellt wird.

Die vorliegende Erfindung wird nachstehend anhand eines in den Zeichnungen dargestellten Ausführungsbeispieles näher erläutert.

Es zeigen:
- Fig. 1: eine schematische Darstellung einer Erntemaschine;
- Fig. 2: einen schematischen Aufbau einer Antriebseinrichtung einer Erntemaschine;
- Fig. 3: ein Diagramm mit verschiedenen Anfahrkennlinien;
- Fig. 4: ein Diagramm mit verschiedenen Anfahrkennlinien gemäß einer weiteren Ausführungsform.

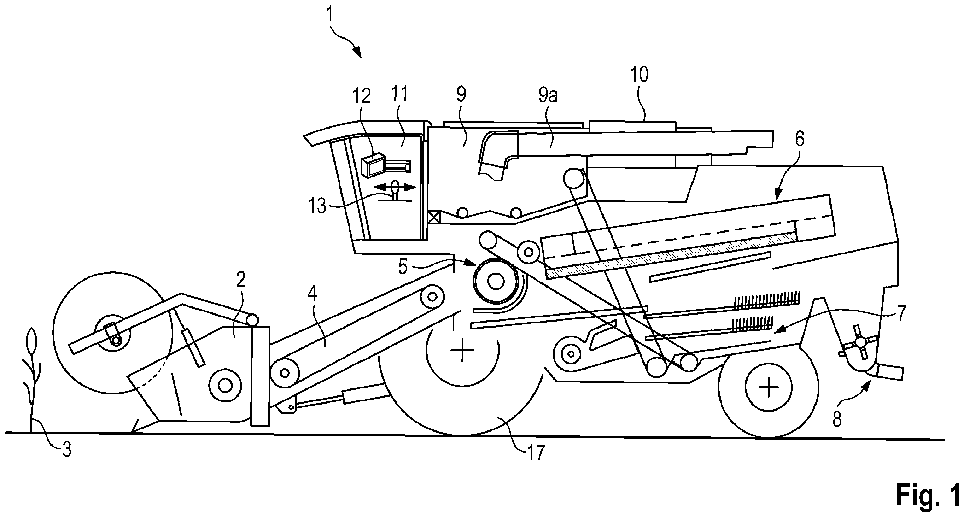

Die Darstellung in Fig. 1 zeigt eine schematische Längsschnittdarstellung einer als Mähdrescher 1 ausgeführten Erntemaschine. Der Mähdrescher 1 trägt in seinem Frontbereich ein höhenverstellbares Schneidwerk 2, welches gewachsenes Erntegut 3 auf großer Breite aberntet, in seitlicher Richtung zusammenführt und an ein Schrägförderorgan 4 übergibt. Durch das Schrägförderorgan 4 gelangt das Erntegut 3 zu einer Dreschvorrichtung 5, die in der Regel als Mehrtrommeldreschwerk ausgeführt ist. Von der Dreschvorrichtung 5 wird ein aus dem Erntegut 3 ein im Wesentlichen aus einem Gemisch aus Körnern, Kurzstroh und Spreu bestehender Erntegutstrom abgeschieden, der auf einen Vorbereitungsboden fällt. Durch Rüttelbewegungen des oszillierend angetriebenen Vorbereitungsbodens wird das Erntegut darauf nach hinten in Richtung einer Reinigungsvorrichtung 7 gefördert.

Der nicht durch von der Dreschvorrichtung 5 abgeschiedene Teil des Ernteguts 3 wird einer nachgeordneten Abscheidevorrichtung 6, die als Axialrotor ausgeführt ist, zugeführt. Ein im Wesentlichen aus einem Gemisch aus Körnern und Ährenbruchstücken sowie Kurzstroh bestehender Erntegutstrom wird von der Abscheidevorrichtung 6 abgeschieden und gelangt auf einen unterhalb Abscheidevorrichtung 6 angeordneten Rücklaufboden.

Anstelle eines einzelnen Axialrotors könnten auch zwei Axialrotoren parallel nebeneinander vorgesehen sein. Alternativ kann als Abscheidevorrichtung 6 eine Hordenschüttlervorrichtung anstelle des Axialrotors zum Einsatz kommen.

Erntegut, im Wesentlichen Stroh, welches am rückwärtigen Ende Abscheidevorrichtung 6 ausgeworfen wird, gelangt zu einer Häcksel- und Verteilvorrichtung 7 am Heck des Mähdreschers 1, von der es zerkleinert und anschließend auf den Boden eines Feldes ausgebracht wird.

Das in den vom Vorbereitungsboden beziehungsweise vom Rücklaufboden kommenden Erntegutströmen enthaltene Korn passiert nacheinander Siebe der Reinigungsvorrichtung 7 und gelangt durch eine Schneckenfördereinrichtung und einen Kornelevator, in einen Korntank 9, der hinter einer Kabine 11 angeordnet ist. Der Inhalt des Korntanks 9 ist mittels einer ein Korntankentleerrohr 9a aufweisender Entleervorrichtung auf ein Transportfahrzeug überladbar.

Zum Antreiben des Mähdreschers 1 sowie dessen Arbeitsaggregaten, wie unter anderem Schneidwerk 2, Dreschvorrichtung 5, Abscheidevorrichtung 6, Reinigungsvorrichtung 7, Häckselvorrichtung 8, Entleervorrichtung sowie eines hydrostatischen Fahrantriebes, ist ein Verbrennungsmotor 10 vorgesehen. Der Verbrennungsmotor 10 treibt einen nicht dargestellten Hauptantrieb an, durch den die Arbeitsaggregate angetrieben werden. Die Arbeitsaggregate sind durch schaltbare Kupplungen mit dem Hauptantrieb des Mähdreschers 1 verbindbar.

In der Kabine 11 ist ein Fahrhebel 13 angeordnet, der insbesondere als ein Multifunktionsgriff ausgebildet sein kann. Mittels des als Multifunktionsgriff ausgebildeten Fahrhebels 13 sind neben der Fahrgeschwindigkeit auch einzelne Arbeitsaggregate ansteuerbar. Weiterhin befindet sich in der Kabine 11 eine Konsole 12 mit Schalt- und Bedienelementen, wie schematisch angedeutet. Der Fahrhebel 13 sowie die Schalt- und Bedienelemente der Konsole 12 dienen der Ansteuerung des Mähdreschers 1 und dessen Arbeitsaggregaten.

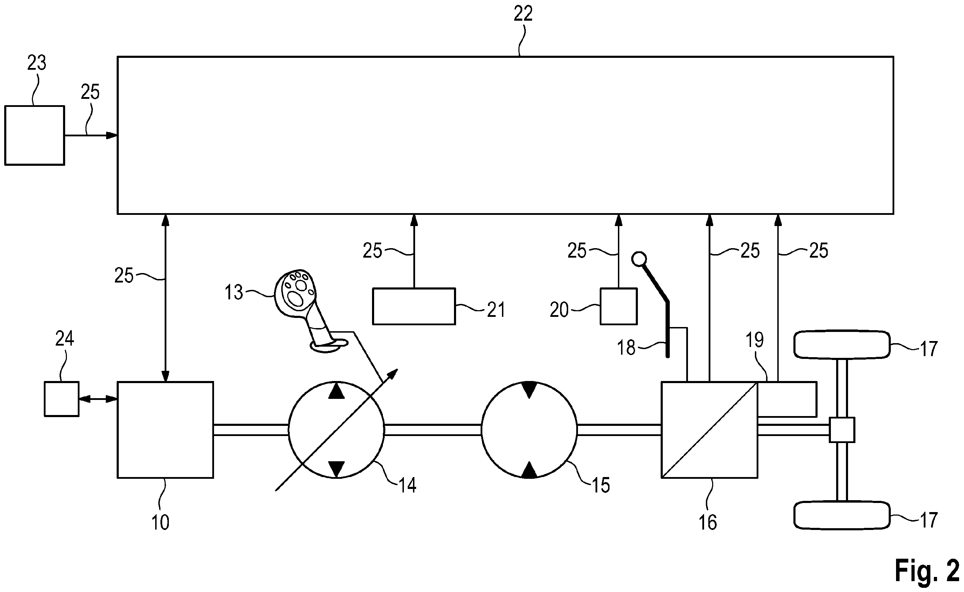

In Fig. 2 ist ein schematischer Aufbau einer Antriebseinrichtung der als Mähdrescher 1 ausgeführten Erntemaschine dargestellt. Der Verbrennungsmotor 10 treibt mittels eines Getriebes eine Hydraulikpumpe 14 an, welche zumindest einen Hydraulikmotor 15 antreibt. Die Fördermenge der Hydraulikpumpe 14 wird von der Antriebsdrehzahl und dem Schwenkwinkel der Hydraulikpumpe 14 bestimmt. Dabei wird die Antriebsdrehzahl der Hydraulikpumpe 14 durch eine Motordrehzahl des Verbrennungsmotors 10 und dem Übersetzungsverhältnis des zwischengeschalteten Getriebes bestimmt. Der Schwenkwinkel der Hydraulikpumpe 14 wird mittels einer mechanischen Verbindung zu dem Fahrhebel 13, beispielsweise durch einen Bowdenzug, durch eine Auslenkung des Fahrhebels 13 eingestellt. Befindet sich der Fahrhebel 13 in einer Neutralstellung, wird keine Hydraulikflüssigkeit von der Hydraulikpumpe 14 an den dieser nachgeordneten Hydraulikmotor 15 gefördert, so dass die Erntemaschine nicht angetrieben wird. Der Hydraulikmotor 15 ist mit einem Schaltgetriebe 16 verbunden, welches dem Antrieb von Rädern 17 an einer Triebachse der Erntemaschine dient. Die von der Hydraulikpumpe 14 geförderte Menge an Hydraulikflüssigkeit und das sogenannte Schluckvolumen des Hydraulikmotors 15 bestimmen die Eingangsdrehzahl des Schaltgetriebes 16. Ausgangsseitig gibt das Schaltgetriebe 16 eine entsprechend der vorgewählten Übersetzung bestimmte Drehzahl beidseitig vom Schaltgetriebe 16 an die Triebachse ab. Die Übersetzung kann mittels eines Schalthebels 18 und einer mechanischen Verbindung zum Schaltgetriebe 16 eingestellt werden. In der Regel besitzt das Schaltgetriebe 26 drei unterschiedliche Übersetzungsstufen, wobei zwei unterschiedliche Übersetzungsstufen mit höherer Übersetzung für den Erntebetrieb und eine Übersetzungsstufe mit geringerer Übersetzung für den Transport- oder Straßenbetrieb vorgesehen sind.

Dem Schaltgetriebe 16 ist ausgangsseitig ein Drehzahlsensor 19 zugeordnet, welcher die am Ausgang des Schaltgetriebes 16 an die Triebachse abgegebene Drehzahl erfasst. Dem Schalthebel 18 ist ein Sensor 20 zugeordnet, mittels dem die eingelegte Gangstufe des Schaltgetriebes 16 bestimmbar ist. Hierzu kann der Sensor 20 mit einem Schaltgestänge oder dem Schalthebel 18 verbunden sein. Weiterhin ist Sensor 21 vorgesehen, welcher die Stellung und eine Betätigung des Fahrhebels 13 detektiert. Ein sogenannter Straßenfahrschalter 23, der auf der Bedienkonsole 12 in der Kabine 11 angeordnet ist, dient dazu, zwischen zwei Betriebsmodi, einem Erntebetriebsmodus und einem Straßenfahrmodus, der Erntemaschine umzuschalten.

Die Sensoren 19, 20, 21, der Straßenfahrschalter 23 als auch ein dem Verbrennungsmotor 10 zugeordnetes Motorsteuergerät 24 sind durch ein Bussystem 25 mit einer Steuerungsvorrichtung 22 verbunden, um Signale zu übertragen und zu empfangen. Die Steuerungsvorrichtung 22 ist dazu eingerichtet, die von den Sensoren 19, 20, 21 empfangenen Signale auszuwerten. Das Motorsteuergerät 24 empfängt von der Steuerungsvorrichtung 22 Steuersignale zur Einstellung der Motordrehzahl.

Bei einem Betrieb des Mähdreschers 1 im Straßenfahrmodus, was anhand der Schalterstellung des Straßenfahrschalter 23 von der Steuerungsvorrichtung 22 bestimmt wird, soll ein Abwürgen des Verbrennungsmotors 10 während eines Beschleunigungsvorgangs, insbesondere aus dem Stillstand des Mähdreschers 1 heraus, bei langen Getriebeübersetzungen und niedrigen Drehzahlen vermieden werden. Der Stillstand des Mähdreschers 1 wird durch die Steuerungsvorrichtung 22 anhand der durch den Sensor 21 überwachten Stellung des Fahrhebels 13 bestimmt. Bei nicht ausgelenktem bzw. in Neutralstellung befindlichem Fahrhebel 13 wird der Stillstand des Mähdreschers 1 festgestellt. Das Motorsteuergerät 24 wird von der Steuerungsvorrichtung 22 angesteuert, um die Motordrehzahl auf eine Leerlaufdrehzahl n_{Leer} abzusenken. Die Leerlaufdrehzahl n_{Leer} liegt dabei bevorzugt in einem Bereich zwischen etwa 800 min⁻¹ und 900 min⁻¹.

Wird der Fahrhebel 13 von einer Bedienperson des Mähdreschers 1 aus seiner Neutralstellung heraus betätigt, um einen Anfahrvorgang einzuleiten, wird dies von der Steuerungsvorrichtung 22 erfasst. Um dem Mähdrescher 1 zu Beginn des Anfahrvorganges, insbesondere unter Berücksichtigung der eingestellten Gangstufe des Schaltgetriebes 16, ein ausreichendes Drehmoment zur Verfügung zu stellen, wird von der Steuerungsvorrichtung 22 im Straßenfahrmodus für den Anfahrvorgang aus dem Stillstand eine Anfahrdrehzahl n_{Anfahr} vorgegeben, die oberhalb einer für das Erreichen einer zulässigen Maximalfahrgeschwindigkeit erforderlichen Motordrehzahl liegt. Bei der erforderlichen Motordrehzahl handelt es sich um eine reduzierte Motordrehzahl n_{red1}, n_{red2}, n_{red3}, welche in einem lokalen Minimum des spezifischen Kraftstoffverbrauchs des Verbrauchskennfeldes des Verbrennungsmotors 10 liegt.

Zulässige Maximalfahrgeschwindigkeiten von Erntemaschinen wie Mähdreschern 1 sind länderspezifisch und können stark variieren. Der Bereich der zulässigen Maximalfahrgeschwindigkeit kann, in Abhängigkeit von der Ausgestaltung des Fahrwerks der Erntemaschine, mit Rädern oder mit Halb- bzw. Vollraupe, zwischen 15 km/h und 50 km/h liegen.

Durch die Steuerungsvorrichtung kann die Anfahrdrehzahl n_{Anfahr} auf einen Wert zwischen etwa 1400 min⁻¹ und 1600 min⁻¹, insbesondere in einem Bereich um 1500 min⁻¹, eingestellt werden.

Mit zunehmender Anfahrgeschwindigkeit wird die Anfahrdrehzahl n_{Anfahr} bis auf die zum Erreichen der zulässigen Maximalfahrgeschwindigkeit erforderliche Motordrehzahl n_{red1}, n_{red2}, n_{red3} abgesenkt. Dabei wird die Absenkung der Anfahrdrehzahl n_{Anfahr} für die Dauer der Zunahme der Fahrgeschwindigkeit der Erntemaschine durchgeführt. Die Absenkung der Anfahrdrehzahl n_{Anfahr} endet, wenn die für das Erreichen der zulässigen Maximalfahrgeschwindigkeit erforderliche Motordrehzahl n_{red1}, n_{red2}, n_{red3} oder eine Anfahrgeschwindigkeit v_{Anfahr} erreicht ist.

Die Absenkung der Anfahrdrehzahl kann dann unterbrochen und umgekehrt, d.h. wieder angehoben, werden, wenn eine Abnahme der Fahrgeschwindigkeit detektiert wird. Dies wird anhand der sensierten Auslenkung des Fahrhebels 13 sowie mittels des Drehzahlsensors 19 durch die Steuerungsvorrichtung 22 bestimmt. Die Detektion der jeweiligen Fahrgeschwindigkeit des Mähdreschers 1 kann beispielsweise mittels GPS, Radar oder dergleichen erfolgen.

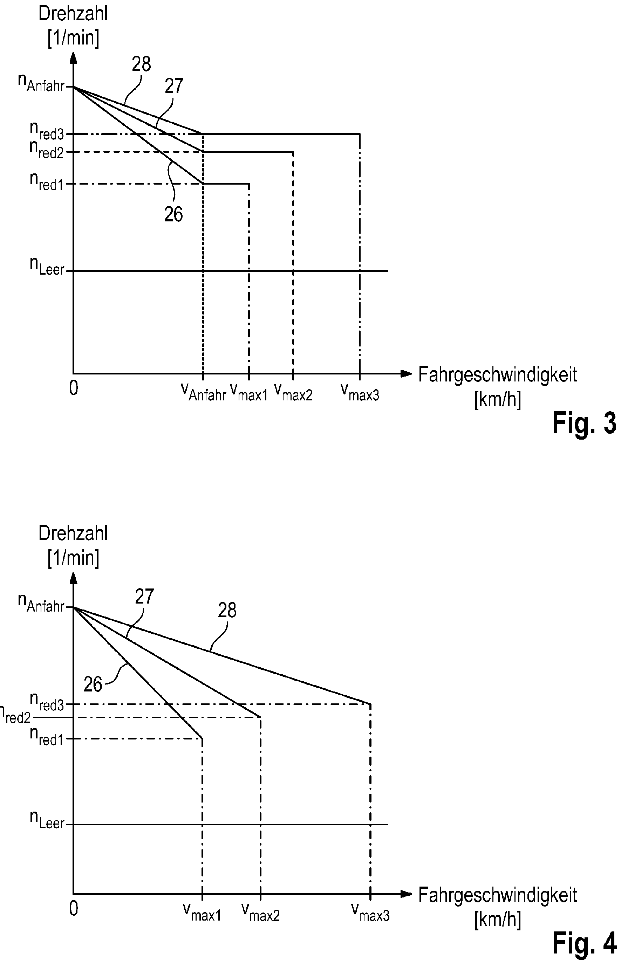

In einem Speicher der Steuerungsvorrichtung 22 werden für unterschiedliche zulässige Maximalfahrgeschwindigkeiten vₘₐₓ₁, vₘₐₓ₂, vₘₐₓ₂ verschiedene Anfahrdrehzahl-Kennlinien 26, 27, 28 für den Straßenfahrmodus hinterlegt, wie sie beispielhaft in Fig. 3 dargestellt sind. Bei der Detektion eines Anfahrvorgangs wird die Motordrehzahl von der Leerlaufdrehzahl n_{Leer} zunächst auf die Anfahrdrehzahl n_{Anfahr} erhöht. Hiervon ausgehend wird die Drehzahl die für das Erreichen der zulässigen Maximalfahrgeschwindigkeit erforderliche Motordrehzahl n_{red1}, n_{red2}, n_{red3} abgesenkt, bis die Anfahrgeschwindigkeit v_{Anfahr} detektiert wird. Mit dem Erreichen der Anfahrgeschwindigkeit v_{Anfahr} wird die Motordrehzahl n_{red1}, n_{red2}, n_{red3} konstant gehalten, so dass bei einer Zunahme der Fahrgeschwindigkeit wegen der Konstanthaltung der Motordrehzahl n_{red1}, n_{red2}, n_{red3} die erreichbare Höchstgeschwindigkeit begrenzt wird. Wird die Fahrgeschwindigkeit wieder reduziert und unterschreitet dabei die Anfahrgeschwindigkeit v_{Anfahr}, so folgt die Drehzahl dem jeweiligen Kennlinienverlauf 26, 27, 28 in korrespondierender Weise bis zum Erreichen der Anfahrdrehzahl n_{Anfahr}.

In Fig. 4 ist ein Diagramm mit verschiedenen Anfahrkennlinien gemäß einer weiteren Ausführungsform dargestellt. Wie aus Fig. 4 ersichtlich, weisen die Kennlinien 26, 27, 28 jeweils einen im Wesentlichen linearen Verlauf. Die Absenkung der Anfahrdrehzahl n_{Anfahr} wird gemäß dieser Ausführungsform bis zum Erreichen der zulässigen Maximalfahrgeschwindigkeit vₘₐₓ₁, vₘₐₓ₂, vₘₐₓ₂ durchgeführt. Je niedriger die zulässige Maximalfahrgeschwindigkeit vₘₐₓ₁, vₘₐₓ₂, vₘₐₓ₂, desto früher wird die reduzierte Motordrehzahl n_{red1}, n_{red2}, n_{red3} erreicht.

Gemäß einem weiteren Aspekt wird bei der Detektion eines Stillstands der Erntemaschine durch die Steuerungsvorrichtung 22 die Motordrehzahl unabhängig von dem ausgewählten Betriebsmodus, Erntebetriebsmodus oder Straßenfahrmodus, auf die Leerlaufdrehzahl n_{Leer} in einem Bereich zwischen 800 min⁻¹ und 900 min⁻¹ abgesenkt.

Die Absenkung auf die Leerlaufdrehzahl n_{Leer} wird im Straßenfahrmodus des Mähdreschers 1 fahrgeschwindigkeitsabhängig durchgeführt. Der jeweilige Betriebsmodus wird hierbei von der Steuerungsvorrichtung 22 anhand der Stellung des Straßenfahrhebels 23 erkannt bzw. diesem signalisiert. Somit wird bei einem durch die Steuerungsvorrichtung 22 erkannten temporären Stillstand des Mähdreschers 1, beispielsweise an einer Kreuzung, Einmündung oder dergleichen, die reduzierte Motordrehzahl n_{red1}, n_{red2}, n_{red3} auf die Leerlaufdrehzahl n_{Leer} abgesenkt. Daraus ergeben sich eine Reduzierung des Kraftstoffverbrauchs sowie eine Verringerung der Geräuschemission. Für das anschließende Anfahren wird, wie weiter oben beschreiben, die Motordrehzahl auf die Anfahrdrehzahl n_{Anfahr} angehoben und anschließend wieder auf die reduzierte Motordrehzahl n_{red1}, n_{red2}, n_{red3} abgesenkt.

Hingegen wird im Erntebetriebsmodus die Absenkung der Leerlaufdrehzahl n_{Leer} fahrgeschwindigkeits- und lastabhängig durchgeführt. Dadurch soll vermeiden werden, dass bei Stillstand des Mähdreschers 1 zum Überladen des im Korntank 9 enthaltenen Erntegutes auf ein Transportfahrzeug die Motordrehzahl abgesenkt wird, so dass für den Überladevorgang nicht die notwendige Antriebsleistung zur Verfügung steht.

Wird von der Steuerungsvorrichtung 22 festgestellt, dass von keinem der im Erntebetriebsmodus aktivierbaren Arbeitsaggregate des Mähdreschers 1 eine Lastanforderung vorliegt und die Fahrgeschwindigkeit bei null liegt, wird die Motordrehzahl entsprechend auf die Leerlaufdrehzahl n_{Leer} abgesenkt. Die Leerlaufdrehzahl n_{Leer} wird dabei solange beibehalten, bis es zu einer erneuten Lastanforderung kommt. Bei einer erneuten Lastanforderung wird die Motordrehzahl von der Leerlaufdrehzahl n_{Leer} auf eine für den Betrieb der Erntemaschine voreingestellte Drehzahlstufe angehoben, welche der im Erntebetriebsmodus an dem Schaltgetriebe eingestellten Übersetzungsstufe entspricht. Lastanforderungen können das Einschalten des Hauptantriebs, eine Hydraulikanforderung beispielsweise des Vorsatzgerätes 2, eine Auslenkung des Fahrhebels 13, das Einschalten der Korntankentleervorrichtung oder dergleichen mehr sein.

**Bezugszeichenliste**

| | | | |
|---|---|---|---|
| 1 | Mähdrescher | n_{Anfahr} | Anfahrdrehzahl |
| 2 | Schneidwerk | n_{red1} | Reduzierte Motordrehzahl |
| 3 | Erntegut | n_{red2} | Reduzierte Motordrehzahl |
| 4 | Schrägförderorgan | n_{red3} | Reduzierte Motordrehzahl |
| 5 | Dreschvorrichtung | v_{Anfahr} | Anfahrgeschwindigkeit |
| 6 | Abscheidevorrichtung | vₘₐₓ₁ | Maximalfahrgeschwindigkeit |
| 7 | Reinigungsvorrichtung | vₘₐₓ₂ | Maximalfahrgeschwindigkeit |
| 8 | Häcksel- und Verteilvorrichtung | vₘₐₓ₃ | Maximalfahrgeschwindigkeit |
| 9 | Korntank | | |
| 9a | Korntankentleerrohr | | |
| 10 | Verbrennungsmotor | | |
| 11 | Kabine | | |
| 12 | Bedienkonsole | | |
| 13 | Fahrhebel | | |
| 14 | Hydraulikpumpe | | |
| 15 | Hydraulikmotor | | |
| 16 | Schaltgetriebe | | |
| 17 | Räder | | |
| 18 | Schalthebel | | |
| 19 | Drehzahlsensor | | |
| 20 | Sensor | | |
| 21 | Sensor | | |
| 22 | Steuerungsvorrichtung | | |
| 23 | Straßenfahrschalter | | |
| 24 | Motorsteuergerät | | |
| 25 | Bussystem | | |
| 26 | Kennlinie | | |
| 27 | Kennlinie | | |
| 28 | Kennlinie | | |

## Patentansprüche

1. Verfahren zum Betreiben einer selbstfahrenden Erntemaschine (1), welche wahlweise in einem Erntebetriebsmodus und einem Straßenfahrmodus betrieben wird, umfassend einen Verbrennungsmotor (10), dessen Drehzahl durch eine Steuerungsvorrichtung (22) in Abhängigkeit von dem gewählten Betriebsmodus eingestellt wird, **dadurch gekennzeichnet, dass** von der Steuerungsvorrichtung (22) im Straßenfahrmodus für einen Anfahrvorgang aus dem Stillstand eine Anfahrdrehzahl (n_{Anfahr}) vorgegeben wird, die bis auf eine zum Erreichen einer zulässigen Maximalfahrgeschwindigkeit (vₘₐₓ₁, vₘₐₓ₂, vₘₐₓ₃) erforderliche Motordrehzahl (n_{red1}, n_{red2}, n_{red3}) abgesenkt wird, wobei die Anfahrdrehzahl (n_{Anfahr}) oberhalb einer für das Erreichen einer zulässigen Maximalgeschwindigkeit erforderliche Motordrehzahl (n_{red1}, n_{red2}, n_{red3}) liegt.

2. Verfahren nach Anspruch 1, **dadurch gekennzeichnet, dass** der Grad der Absenkung der Anfahrdrehzahl (n_{Anfahr}) in Abhängigkeit von der zulässigen Maximalfahrgeschwindigkeit (vₘₐₓ₁, vₘₐₓ₂, vₘₐₓ₃) durchgeführt wird.

3. Verfahren nach Anspruch 1 oder 2, **dadurch gekennzeichnet, dass** eine maximale Anfahrgeschwindigkeit (v_{Anfahr}) vorgegeben wird, die unterhalb der zulässigen Maximalfahrgeschwindigkeit (vₘₐₓ₁, vₘₐₓ₂, vₘₐₓ₃) liegt, wobei bis zum Erreichen der maximalen Anfahrgeschwindigkeit (v_{Anfahr}) die Anfahrdrehzahl (n_{Anfahr}) auf die für das Erreichen der zulässigen Maximalfahrgeschwindigkeit (vₘₐₓ₁, vₘₐₓ₂, vₘₐₓ₃) erforderlichen Motordrehzahl abgesenkt wird.

4. Verfahren nach einem der vorangehenden Ansprüche, **dadurch gekennzeichnet, dass** das Vorliegen eines Anfahrvorgangs der Erntemaschine (1) anhand einer Betätigung eines Fahrhebels (13) oder Fahrpedals detektiert wird.

5. Verfahren nach einem der vorangehenden Ansprüche, **dadurch gekennzeichnet, dass** für unterschiedliche zulässige Maximalfahrgeschwindigkeit (vₘₐₓ₁, vₘₐₓ₂, vₘₐₓ₃) verschiedene Anfahrdrehzahl-Kennlinien (26, 27, 28) in einem Speicher der Steuerungsvorrichtung (22) hinterlegt werden.

6. Verfahren nach einem der vorangehenden Ansprüche, **dadurch gekennzeichnet, dass** die Absenkung der Anfahrdrehzahl (n_{Anfahr}) bei zunehmender Fahrgeschwindigkeit der Erntemaschine (1) durchgeführt wird.

7. Verfahren nach einem der vorangehenden Ansprüche, **dadurch gekennzeichnet, dass** die Anfahrdrehzahl (n_{Anfahr}) auf einen Wert zwischen etwa 1400 min⁻¹ und 1600 min⁻¹, insbesondere in einem Bereich um 1500 min⁻¹, eingestellt wird.

8. Verfahren nach einem der vorangehenden Ansprüche, **dadurch gekennzeichnet, dass** bei Detektion eines Stillstands der Erntemaschine (1) die Motordrehzahl unabhängig von dem ausgewählten Betriebsmodus, Erntebetriebsmodus oder Straßenfahrmodus, auf eine Leerlaufdrehzahl (n_{Leer}), insbesondere in einem Bereich um etwa 800 min⁻¹ bis 900 min⁻¹ abgesenkt wird.

9. Verfahren nach Anspruch 8, **dadurch gekennzeichnet, dass** die Absenkung auf die Leerlaufdrehzahl (n_{Leer}) fahrgeschwindigkeits- und/ oder lastabhängig durchgeführt wird.

10. Verfahren nach einem der vorangehenden Ansprüche, **dadurch gekennzeichnet, dass** bei einer Lastanforderung die Motordrehzahl von der Leerlaufdrehzahl (n_{Leer}) auf eine für den Betrieb der Erntemaschine (1) voreingestellte Drehzahlstufe angehoben wird.

11. Verfahren nach einem der vorangehenden Ansprüche, **dadurch gekennzeichnet, dass** die Motordrehzahl lastabhängig geregelt wird.

12. Selbstfahrende Erntemaschine (1), welche wahlweise in einem Erntebetriebsmodus und einem Straßenfahrmodus betreibbar ist, umfassend einen Verbrennungsmotor (10), dessen Drehzahl durch eine Steuerungsvorrichtung (22) in Abhängigkeit von dem gewählten Betriebsmodus eingestellt wird, **dadurch gekennzeichnet, dass** die Steuerungsvorrichtung (22) dazu eingerichtet ist, im Straßenfahrmodus für einen Anfahrvorgang aus dem Stillstand eine Anfahrdrehzahl (n_{Anfahr}) vorzugeben, die bis auf eine zum Erreichen einer zulässigen Maximalfahrgeschwindigkeit (vₘₐₓ₁, vₘₐₓ₂, vₘₐₓ₃) erforderliche Motordrehzahl (n_{red1}, n_{red2}, n_{red3}) abgesenkt wird, wobei die Anfahrdrehzahl (n_{Anfahr}) oberhalb einer für das Erreichen einer zulässigen Maximalgeschwindigkeit erforderliche Motordrehzahl (n_{red1}, n_{red2}, n_{red3}) liegt.

13. Selbstfahrende Erntemaschine nach Anspruch 12, **dadurch gekennzeichnet, dass** die Steuerungsvorrichtung (22) dazu eingerichtet sein, die Absenkung der Anfahrdrehzahl (n_{Anfahr}) bis zum Erreichen einer Anfahrgeschwindigkeit (v_{Anfahr}) durchzuführen.

14. Selbstfahrende Erntemaschine (1) nach Anspruch 12 oder 13, **dadurch gekennzeichnet, dass** der Verbrennungsmotor (10) einen hydrostatischen Fahrantrieb mit zumindest einer Hydraulikpumpe (14) und zumindest einem Hydraulikmotor (15) antreibt, wobei die zumindest eine Hydraulikpumpe (14) mittels eines Fahrhebels (13) mechanisch verstellt wird.

## Claims

1. A method of operating a self-propelled harvester (1) which is operated selectively in a harvesting operating mode and an on-road travel mode, including an internal combustion engine whose rotary speed is adjusted by a control device (22) in dependence on the selected operating mode, **characterised in that** a starting rotary speed (n_{Anfahr}) is predetermined by the control device (22) in the on-road travel mode for a starting operation from standstill, the starting rotary speed being reduced to an engine speed (n_{red1}, n_{red2}, n_{red3}) required for attaining a permissible maximum travel speed (vₘₐₓ₁, vₘₐₓ₂, vₘₐₓ₃), wherein the starting rotary speed (n_{Anfahr}) is above an engine speed (n_{red1}, n_{red2}, n_{red3}) required for attaining a permissible maximum speed.

2. A method according to claim 1 **characterised in that** the degree of reduction in the starting rotary speed (n_{Anfahr}) is carried out in dependence on the permissible maximum travel speed (vₘₐₓ₁, vₘₐₓ₂, vₘₐₓ₃).

3. A method according to claim 1 or claim 2 **characterised in that** a maximum starting speed (v_{Anfahr}) is predetermined, which is below the permissible maximum travel speed (vₘₐₓ₁, vₘₐₓ₂, vₘₐₓ₃), wherein until the maximum starting peed (v_{Anfahr}) is reached the starting rotary speed (n_{Anfahr}) is reduced to the engine speed required for attaining the permissible maximum travel speed (vₘₐₓ₁, vₘₐₓ₂, vₘₐₓ₃).

4. A method according to one of the preceding claims **characterised in that** the existence of a starting process for the harvester (1) is detected by means of actuation of an accelerator lever (13) or accelerator pedal.

5. A method according to one of the preceding claims **characterised in that** different starting rotary speed characteristic curves (26, 27, 28) are stored in a memory of the control device (22) for different permissible maximum travel speeds (vₘₐₓ₁, vₘₐₓ₂, vₘₐₓ₃).

6. A method according to one of the preceding claims **characterised in that** the reduction in the starting rotary speed (n_{Anfahr}) is performed with increasing travel speed of the harvester (1).

7. A method according to one of the preceding claims **characterised in that** the starting rotary speed (n_{Anfahr}) is adjusted to a value between about 1400 min⁻¹ and 1600 min⁻¹, in particular in a region around 1500 min⁻¹.

8. A method according to one of the preceding claims **characterised in that** upon detection of a standstill of the harvester (1) the engine speed is reduced to an idle speed (n_{Leer}), in particular in a range around approximately 800 min⁻¹ to 900 min⁻¹ irrespective of the selected operating mode, harvesting operating mode or on-road travel mode.

9. A method according to claim 8 **characterised in that** the reduction to the idle speed (n_{Leer}) is effected in dependence on travel speed and/or load.

10. A method according to one of the preceding claims **characterised in that** upon a load demand the engine speed is raised from the idle speed (n_{Leer}) to a speed level preset for operation of the harvester (1).

11. A method according to one of the preceding claims **characterised in that** the engine speed is regulated in load-dependent relationship.

12. A self-propelled harvester (1) which is operable selectively in a harvesting operating mode and an on-road travel mode, including an internal combustion engine (10), the rotary speed of which is adjusted by a control device (22) in dependence on the selected operating mode, **characterised in that** the control device (22) is adapted in the on-road travel mode for a starting process from standstill to predetermine a starting rotary speed (n_{Anfahr}) which is reduced to an engine speed (n_{red1}, n_{red2}, n_{red3}) required for attaining a permissible maximum travel speed (vₘₐₓ₁, vₘₐₓ₂, vₘₐₓ₃), wherein the starting rotary speed (n_{Anfahr}) is above an engine speed (n_{red1}, n_{red2}, n_{red3}) required for attaining a permissible maximum speed.

13. A self-propelled harvester according to claim 12 **characterised in that** the control device (22) is adapted to perform the reduction in the starting rotary speed (n_{Anfahr}) until a starting travel speed (V_{Anfahr}) is reached.

14. A self-propelled harvester (1) according to claim 12 or claim 13 **characterised in that** the internal combustion engine (10) drives a hydrostatic travel drive with at least one hydraulic pump (14) and at least one hydraulic motor (15), wherein the at least one hydraulic pump (14) is mechanically adjusted by means of an accelerator lever (13).

## Revendications

1. Procédé de fonctionnement d'une machine de récolte automotrice (1) qui est exploitée sélectivement dans un mode de fonctionnement de récolte et dans un mode de marche sur route, incluant un moteur à combustion interne (10) dont la vitesse de rotation est réglée par l'intermédiaire d'un dispositif de commande (22) en fonction du mode de fonctionnement sélectionné, **caractérisé en ce que**, en mode de marche sur route, une vitesse de rotation de démarrage (n_{Anfahr}) à l'arrêt est prescrite par le dispositif de commande (22), laquelle est abaissée jusqu'à une vitesse de rotation de moteur (n_{red1}, n_{red2}, n_{red3}) requise pour atteindre une vitesse de marche maximale admise (vₘₐₓ₁, vₘₐₓ₂, vₘₐₓ₃), la vitesse de rotation de démarrage (n_{Anfahr}) étant supérieure à une vitesse de rotation de moteur (n_{red1}, n_{red2}, n_{red3}) requise pour atteindre une vitesse de marche maximale admise.

2. Procédé selon la revendication 1, **caractérisé en ce que** le degré d'abaissement de la vitesse de rotation de démarrage (n_{Anfahr}) est fonction de la vitesse de marche maximale admise (vₘₐₓ₁, vₘₐₓ₂, vₘₐₓ₃).

3. Procédé selon la revendication 1 ou 2, **caractérisé en ce qu'**est prescrite une vitesse de démarrage maximale (v_{Anfahr}) qui est inférieure à la vitesse de marche maximale admise (vₘₐₓ₁, vₘₐₓ₂, vₘₐₓ₃), jusqu'à l'atteinte de la vitesse de démarrage maximale (v_{Anfahr}) la vitesse de rotation de démarrage (n_{Anfahr}) étant abaissée à la vitesse de rotation de moteur requise pour atteindre la vitesse de marche maximale admise (vₘₐₓ₁, vₘₐₓ₂, vₘₐₓ₃).

4. Procédé selon une des revendications précédentes, **caractérisé en ce que** l'occurrence d'un démarrage de la machine de récolte (1) est détectée à l'aide d'un actionnement d'un levier d'avancement (13) ou d'une pédale d'accélérateur.

5. Procédé selon une des revendications précédentes, **caractérisé en ce que**, pour différentes vitesses de marche maximales admises (vₘₐₓ₁, vₘₐₓ₂, vₘₐₓ₃), diverses courbes caractéristiques de vitesse de rotation de démarrage (26, 27, 28) sont enregistrées dans une mémoire du dispositif de commande (22).

6. Procédé selon une des revendications précédentes, **caractérisé en ce que** l'abaissement de la vitesse de rotation de démarrage (n_{Anfahr}) est réalisé en cas de vitesse de marche croissante de la machine de récolte (1).

7. Procédé selon une des revendications précédentes, **caractérisé en ce que** la vitesse de rotation de démarrage (n_{Anfahr}) est réglée à une valeur entre environ 1 400 tr/min et 1 600 tr/min, en particulier dans une plage autour de 1 500 tr/min.

8. Procédé selon une des revendications précédentes, **caractérisé en ce que**, en cas de détection d'un arrêt de la machine de récolte (1), la vitesse de rotation de moteur est abaissée indépendamment du mode de fonctionnement sélectionné, mode de fonctionnement de récolte ou mode de marche sur route, à une vitesse de rotation à vide (n_{Leer}), en particulier dans une plage autour d'environ 800 tr/min à 900 tr/min.

9. Procédé selon la revendication 8, **caractérisé en ce que** l'abaissement à la vitesse de rotation à vide (n_{Leer}) est réalisé en fonction de la vitesse de marche et/ou de la charge.

10. Procédé selon une des revendications précédentes, **caractérisé en ce que**, en cas d'appel de charge, la vitesse de rotation de moteur est portée de la vitesse de rotation à vide (n_{Leer}) à un palier de vitesse de rotation préréglé pour le fonctionnement de la machine de récolte (1).

11. Procédé selon une des revendications précédentes, **caractérisé en ce que** la vitesse de rotation de moteur est régulée en fonction de la charge.

12. Machine de récolte automotrice (1) qui est exploitable sélectivement dans un mode de fonctionnement de récolte et dans un mode de marche sur route, incluant un moteur à combustion interne (10) dont la vitesse de rotation est réglée par l'intermédiaire d'un dispositif de commande (22) en fonction du mode de fonctionnement sélectionné, **caractérisée en ce que**, en mode de marche sur route, le dispositif de commande (22) est agencé pour prescrire, pour un démarrage à l'arrêt, une vitesse de rotation de démarrage (n_{Anfahr}) qui est abaissée jusqu'à une vitesse de rotation de moteur (n_{red1}, n_{red2}, n_{red3}) requise pour atteindre une vitesse de marche maximale admise (vₘₐₓ₁, vₘₐₓ₂, vₘₐₓ₃), la vitesse de rotation de démarrage (n_{Anfahr}) étant supérieure à une vitesse de rotation de moteur (n_{red1}, n_{red2}, n_{red3}) requise pour atteindre une vitesse de marche maximale admise.

13. Machine de récolte automotrice selon la revendication 12, **caractérisée en ce que** le dispositif de commande (22) est agencé pour réaliser l'abaissement de la vitesse de rotation de démarrage (n_{Anfahr}) jusqu'à atteindre d'une vitesse de démarrage (V_{Anfahr}) .

14. Machine de récolte automotrice (1) selon la revendication 12 ou 13, **caractérisée en ce que** le moteur à combustion interne (10) entraîne une transmission hydrostatique avec au moins une pompe hydraulique (14) et au moins un moteur hydraulique (15), la au moins une pompe hydraulique (14) étant réglée mécaniquement au moyen d'un levier d'avancement (13).
